Europäisches Patentamt

European Patent Office

Office européen des brevets

(19)

(11) Publication number: **0 051 971**
**A1**

(12) **EUROPEAN PATENT APPLICATION**

(21) Application number: 81305219.8

(22) Date of filing: 03.11.81

(51) Int. Cl.³: **F 16 D 13/26,** F 16 D 7/02,
F 16 D 55/28, F 16 D 67/02

(30) Priority: 11.11.80 GB 8036152
16.02.81 GB 8104785

(43) Date of publication of application: 19.05.82
Bulletin 82/20

(84) Designated Contracting States: AT BE CH DE FR GB IT
LI LU NL SE

(71) Applicant: TEMPLAR TOOLS (MANUFACTURING)
LIMITED, Unit 2 Haseley Trading Estate, Great Haseley
Oxfordshire OX9 7PF (GB)

(72) Inventor: Hazlewood, Anthony Selwyn, Little Brays
Kingston Street, Chinnor Oxfordshire (GB)
Inventor: Beattie, Charles Edward, 2 Albert Street, Tring
Hertfordshire (GB)

(74) Representative: Saunders, Harry, SAUNDERS &
DOLLEYMORE 2 Norfolk road, Rickmansworth
Hertfordshire WD3 1JH (GB)

(54) Coupling, clutch and/or brake.

(57) The coupling comprises two coaxial discs (1, 11; 26, 28; 36, 38; 46, 48) a resilient ring (8; 29; 39; 49) of frictional material positioned between the discs, means (14) for retaining the ring substantially coaxially with the discs, and means (7; 27; 37; 47) for biasing the discs into frictional contact with the ring. The clutch includes an additional means for engagement and disengagement of the discs. If the clutch is a slipping clutch it includes setting means (6) for the adjustment of the biasing force exerted by the biasing means (7). The brake has the same element as the clutch but one of the discs is stationary.

-1-

# COUPLING, CLUTCH AND/OR BRAKE

The invention relates to a coupling comprising two coaxial discs, to a clutch comprising said coupling, to a slipping clutch or a torque limiting device comprising the coupling, and to a brake comprising said clutch, and also to a clutch and brake assembly.

Said devices as currently made require a high degree of precision and are complicated. Where attempts have been made to simplify them, as for instance in dog clutches, some compromise has been made in respect of reliability, wear and a harsh operation.

The aim of the invention is to provide a device which can be made cheaply, need not be very accurate and operation of which is relatively gentle, avoiding transmission of high shock loads, i.e. a device which can perform as well as the more sophisticated devices without the expensive production techniques being required.

The invention provides a coupling comprising two coaxial discs, a resilient ring of frictional material positioned between the discs, means retaining the ring substantially coaxially with the discs, and means for biasing the discs into frictional contact with the ring. The resilient ring is preferably a torque-transmission belt of the type known as V-belt.

The invention also relates to a clutch comprising

-2-

such coupling including means for engagement and disengagement of the discs.

The invention also relates to a slip clutch comprising a clutch according to the invention and including setting means for the adjustment of the biasing force exerted by the biasing means.

The invention also relates to a brake comprising a clutch according to the invention in which one of said discs is stationary.

Finally the invention relates to a clutch and brake assembly comprising a clutch member, a stationary brake member, a dual function clutch/brake member, a first resilient ring between the dual function member and the clutch member, a second resilient ring between the dual function member and the brake member, and a control mechanism for displacing the dual function member between a torque transmitting position in which it presses the first ring onto the clutch member and a braking position in which it presses the second ring onto the brake member.

-3-

The invention will now be described, by way of example, with reference to the accompanying diagrammatic drawings, in which:-

Figure 1 shows one embodiment of a clutch,

Figure 2 shows a first embodiment of a combined brake and clutch,

Figure 3 shows a second embodiment of a combined brake and clutch,

Figure 4 shows a third embodiment of a combined brake and clutch, and

Figure 5 shows a slip clutch.

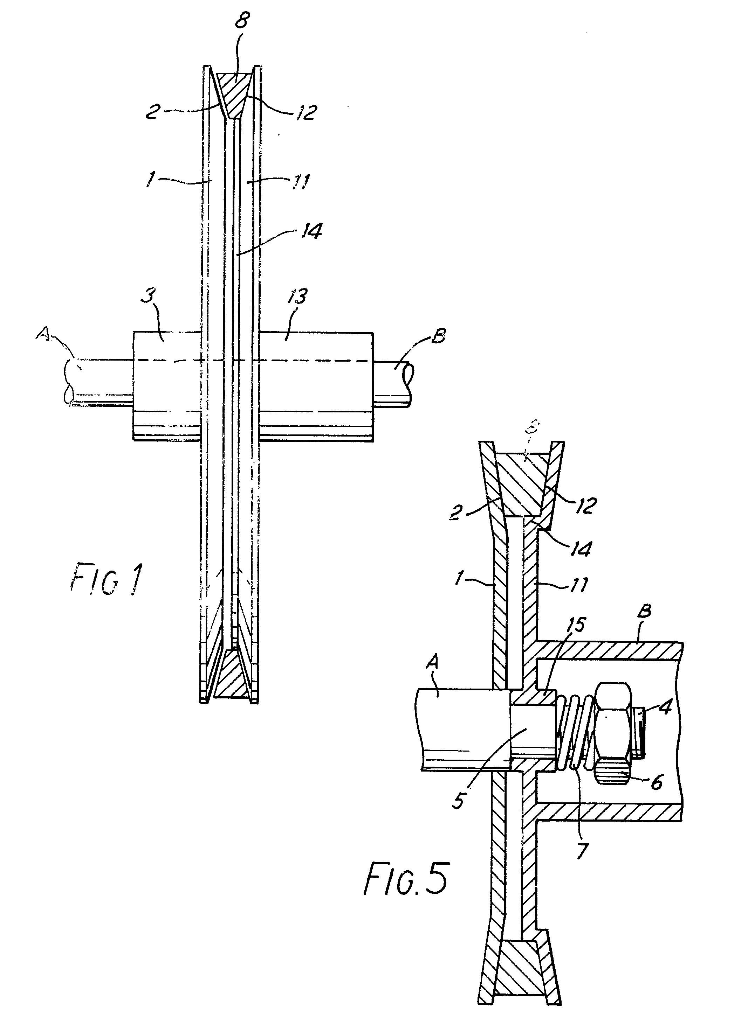

The clutch as shown in Figure 1 comprises a first disc 1 and a second disc 11 arranged adjacent to and coaxially with each other. The discs 1 and 11 are provided on their inner sides, i.e. their mutually adjacent sides, with respective oppositely inclined annular frusto-conical surfaces 2 and 12, hereinafter called flanks 2 and 12, respectively. On their outer surfaces the discs 1 and 11 are provided with respective hubs 3 and 13 by means of which they are connected to respective shafts A and B. In the illustrated embodiment the shaft A is a driving shaft driven by a motor or internal combustion engine (not shown) and the shaft B is a driven shaft which may drive a working tool or implement (not shown), e.g. a pronged wheel of a tiller.

-4-

As described so far, the discs 1 and 11 are nearly mirror images of each other. However the disc 11 is on its inside provided, in addition, with a coaxial cylindrical projection 14 the peripheral surface of which meets the inner periphery of the flank 12, so that the flank 12 and said peripheral surface have substantially the shape of approximately one half of a V-groove of the type used in pulleys.

A ring 8 in the form of a V-belt of the type used in V-belt drives is positioned between the discs 1, and 11. The radially inner periphery of the ring 8 will be called "the base", the radially outer periphery will be called "the top" and the faces connecting the base and the top will be called "the sides". The clutch is so designed that the ring 8 is with its base slid on the peripheral surface of the projection 14 and is held thereon by friction, while one of the sides of the ring 8 is in contact with the flank 12.

The clutch includes means (not shown) for engagement and disengagement of the discs 1 and 11, which, when the clutch is engaged, push the discs 1 and 11 towards each other so that their flanks 2 and 12 are pressed on to the sides of the ring 8 whereby frictional contact is established between the discs 1 and 11 via the ring 8, so that, in operation, torque may be transmitted from the disc 1 on to the disc 11, and, when the clutch is disengaged, hold the discs 1 and 11 apart so that there is a sufficient clearance between the flank 2 and the adjacent side of the ring 8.

The clutch described with reference to the drawing, may be modified in a number of ways. So for instance the discs 1 and 11 need not be nearly identical and substantially planar. For instance the disc 1 may be a pressed steel disc the outer rim of which is bent to provide a flank similar to the flank 2. At least one of the discs may have at its axial region a recess in its inner side or its axial region may be shaped to extend away from the other disc so that the latter may have his hub on the inner side. Also the discs need not be solid but may be e.g. in the form of an annulus having said flank and attached by radial arms to the hub.

Also the ring 8 need not be a V-belt but may be a double V-belt, i.e. a belt which is substantially hexagonal in cross-section. Also a belt 8 of another cross-section, e.g. a square or rectangular cross-section could be used but then the flanks of the disc would have to be made so as to be substantially parallel to the sides of the belt. The ring need not be situated on the outer periphery of the rings but may be positioned nearer to the axis e.g. in a suitably made groove, and, of course, the clutch may comprise several coaxial rings of different diameter.

It will be understood that the clutch shown in Figure 1 could also be used as a brake if one of the discs were made stationary and the other were carried by a driven shaft. The means for engagement and disengagement of the discs would cause braking in the engagement position.

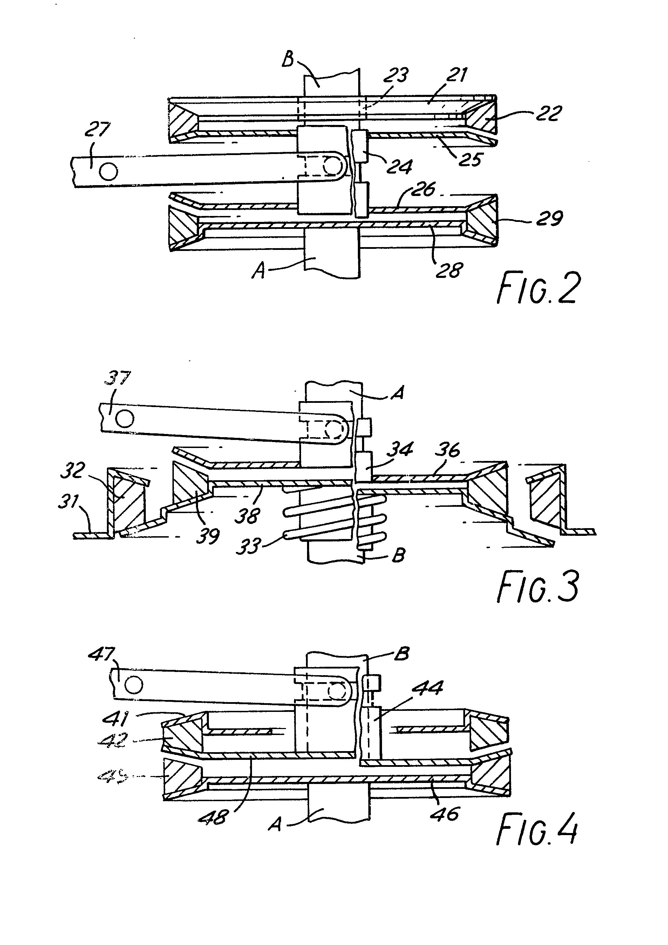

The device shown in Figure 2 is a unit comprising a clutch and a brake shown on the right hand side in the driving position and on the left hand side in the braking position. The device comprises a first brake disc 21 carrying a braking ring 22 which are substantially the same as the disc 11 and ring 8 described in connection with Figure 1, except that here the disc 21 is stationary and has a central opening 23 through which passes a driven shaft B. The driven shaft carries at its illustrated end a sleeve 24 to which are firmly connected a second brake disc 25 and a first clutch disc 26. The sleeve 24 is axially displaceable on the driven shaft B by means of a two-arm lever mechanism 27. Figure 2 shows also a driving shaft A which is coaxial with the driven shaft B and carries at its end a second clutch disc 28 carrying a torque transmission ring 29.

In the driving position the disc 26 is in engagement with the ring 29 while the disc 25 is spaced from the ring 22. In the braking position the disc 26 is spaced from the ring 29 while the disc 25 is in engagement with the ring 22.

The device shown in Figure 3 shows a second embodiment of a unit comprising a clutch and a brake and is also shown on the right hand side in the driving position and on the left hand side in the braking position. The device comprises a stationary brake annulus 31 carrying a braking ring 32. A driving shaft A carries at its illustrated end a sleeve 34 to which is firmly connected a clutch disc 36. The sleeve 34 is axially displaceable on the driving shaft A by means of a two-arm lever mechanism 37. Figure 3 shows also a driven shaft B which is coaxial with the driving shaft A and carries at its end an intermediate disc 38 which carries a torque transmission ring 39.

The disc 38 is biased by a spring 33.

In the driving position the disc 36 is pressed against the ring 39 which compresses the spring and disengages the disc 38 from engagement with the ring 32. In the braking position the disc 36 is spaced from the ring 39 while the disc 38 is pressed by the spring 33 into engagement with the ring 32.

The device shown in Figure 4 is a third embodiment of a unit comprising a clutch and a brake shown on the right hand side in the driving position and on the left hand side in the braking position. The device comprises

**0051971**

-8-

a fixed braking disc 41 carrying a braking ring 42.
A driving shaft A carries at its illustrated end a clutch
disc 46 carrying a torque transmitting ring 49. A driven
shaft B carries at its illustrated end a sleeve 44 to
which is firmly connected an intermediate disc 48.
The sleeve 44 is axially displaceable on the driven
shaft B by means of a two-arm lever mechanism 47.

The driving and braking positions are similar
to those described in connection with Figure 3.

As will be seen from the drawings, in all the
embodiments shown in Figures 2 to 4 the torque-
transmitting rings 29, 39, 49, and also the braking
ring 22 are retained by retaining means similar to the
retaining means represented by the projection 14 in
the embodiment shown in Figure 1. For instance in that
embodiment recesses or projections could be made in
the base and/or the side of the ring 8 engaging with
complementary projections or recesses in the cylindrical
surface of the projection 14 and/or the face 12 to make
the ring 8 slippable relative to the disc 11. Similar
recesses could even be made in the opposite side of
the ring 8. While this arrangement was explained, for
simplicity, with reference to Figure 1, it may be used
analogically with the embodiments shown in Figures 2
to 4.

It will be understood from the description and

-9-

drawings that the terms "disc" and "ring" were used
for simplicity and should be construed in the broadest
possible way, because any of the discs could be
substantially ring-shaped, and any of the rings could
be substantially disc-shaped.

Figure 5 shows a torque-limiting device in the
form of a slipping clutch comprising a first disc 1
and a second disc 11 having respective oppositely
inclined flanks 2 and 12, the second disc 11 having
a coaxial cylindrical projection 14 for supporting a
ring 8 in the form of a V-belt. The elements 1, 11,
2, 12, 14 and 8 substantially the same as described
in connection with Fig.1.

The first disc 1 is connected to a first shaft A
(in the illustrated embodiment a driven shaft) and
a second disc 11 is connected to a second shaft B (in
the illustrated embodiment a driven shaft). The shaft A
is rod-shaped and has a front part of reduced diameter
which has a threaded outer portion 4 and a smooth inner
portion 5. The shaft B is hollow and the second disc 11
has a sleeve 15 through which passes the front part
of the shaft A such that the sleeve 15 is on the smooth
portion 5 and the threaded portion 4 protudes into the
shaft B and carries a nut 6. A compression spring 7
is situated between the nut 6 and the sleeve 15. The
force exerted by the spring 7 onto the sleeve 15, and
thereby the force pressing the flank 2 onto the ring 8,

-10-

which determines the torque at which the clutch begins
to slip, is controlled by the nut 6. The nut 6 may
be a locking nut or an additional lock nut may be
provided.

It will be understood that devices as shown in
Fig.5 could be used in association with ground wheels
of a power driven appliance, such as a mower, to act
in a manner akin to a differential, by limiting the
torque transmitted to the inner wheel when the appliance
is being turned into a different direction of travel.

-11-

## CLAIMS

1.   A coupling comprising two coaxial discs (1, 11; 26, 28; 36, 38; 46, 48), characterised by a resilient ring (8; 29; 39; 49) of frictional material positioned between the discs (1, 11; 26, 28; 36, 38; 46, 48), means (14) for retaining the ring (8; 29; 39; 49) substantially coaxially with the discs (1, 11; 26, 28; 36, 38; 46, 48), and means (27; 37; 47) for biasing the discs (1, 11; 26, 28; 36, 38; 46, 48) into frictional contact with the ring (8; 29; 39; 49).

2.   A coupling according toclaim 1, characterised in that the means (14) for retaining the ring (8; 29; 39; 49) are a substantially cylindrical  projection (14) connected to or forming part of, and coaxial with, one of said discs (1, 11; 26, 28; 36, 38; 46, 48).

3.   A coupling according to claim 1 or 2, characterised in that the ring (8; 29; 39; 49) is a torque-transmission belt.

4.   A coupling according to claim 3, characterised in that the belt is a V-belt or a double V-belt, or a belt of symmetrical cross-section.

5.   A coupling according to any one of the preceding claims, characterised in that it has two or more said rings (8; 29; 39; 49).

6.   A clutch comprising a coupling according to any one of the preceding claims, characterised in that it further includes means for engagement and disengagement of the discs (1, 11; 26, 28; 36, 38; 46, 48).

7.   A clutch according to claim 6, characterised in that the means for engagement and disengagement of the discs (1, 11; 26, 28; 36, 38; 46, 48) is combined with the said biasing means (27; 37; 47).

8.   A slipping clutch comprising a clutch according to claim 6 or 7, characterised by setting means (14) for the adjustment of the biasing force exerted by the biasing means (27; 37; 47).

9.   A brake comprising a clutch according to claim 6 or 7, characterised in that one of said discs (1, 11; 26, 28; 36, 38; 46, 48) is stationary.

10.   A clutch and brake assembly, characterised by a clutch member (28; 36; 46), a stationary brake member (21; 31; 41), a dual function clutch/brake member (24 - 26; 38; 48), a first resilient ring (29; 39; 49) between the dual function member (24 - 26; 38; 48) and the clutch member (28; 36; 46), a second resilient ring (22; 32; 42) between the dual function member (24 - 26; 38; 48) and the brake member (21; 31; 41), and a control mechanism (27; 37; 47) for displacing the dual function member (24 - 26; 38; 48) between a torque transmitting position in which it presses the first ring (29; 39; 49) on to the clutch member (28; 36; 46) and a braking
position in which it presses the second ring (22; 32;
42) on to the brake member (21; 31; 41)

11.   An assembly according to claim 10 characterised
by a first retaining means on the clutch member
(28; 36; 46) or the dual function member (24 - 26; 38; 48)
for retaining the first ring (29; 39; 49), and a second
retaining means on the brake member (21; 31; 41) or the
dual function member (24 - 26; 38; 48) for retaining the
second ring (22; 32; 42).

12.   An assembly according to claim 11, characterised
in that at least one of the retaining means is a
substantially cylindrical projection connected to or
forming part of, and coaxial with, the associated
member.

13.   An assembly according to any one of claims 10
to 12, characterised in that at least one of the rings
(29; 39; 49; 22; 32; 42) is a torque-transmission belt.

14.   An assembly according to claim 13 characterised
in that the belt is a V-belt, a double V-belt, or a
belt of symmetrical cross-section.

15.   An assembly according to any one of claims 10
to 14, characterised in that it has two or more said
first rings and/or said second rings.

-14-

16.   An assembly according to any one of claims 10 to 15 wherein the clutch is a slipping clutch according to claim 8.

17.   An assembly according to any one of claims 10 to 15 comprising a slipping clutch according to claim 8.


The following claim is for use in the United Kingdom only:

18.   A coupling, clutch or brake constructed, arranged and adapted to operate substantially as herein described with reference to, and as shown in, any one of Figures 1 to 5 of the accompanying drawings.

FIG 1

FIG.5

FIG.2

FIG.3

FIG.4

## DOCUMENTS CONSIDERED TO BE RELEVANT

| Category | Citation of document with indication, where appropriate, of relevant passages | Relevant to claim |
|---|---|---|
| X | GB - A - 752 908 (GENERAL CONTROL) <br><br> * page 1, lines 49-68; page 2, figures 2,4,5 * <br><br> -- | 1,2,3, 6 |
| A | US - A - 3 199 312 (GLASGOW) <br><br> * the whole document * <br><br> -- | 1,2,3, 4,5 |
| A | US - A - 2 824 435 (HOCHREUTER) <br><br> * colonne 1, lignes 22-31; colonne 2, lignes 20-23; figure 1 * <br><br> -- | 8 |
| A | GB - A - 170 692 (BOWMAN) | |
| A | US - A - 1 948 910 (SHELOR) | |
| A | US - A - 2 465 810 (MAC DONALD) | |
| A | US - A - 2 985 992 (DOWDLE) | |
| A | US - A - 3 042 166 (CRANE) | |
| A | US - A - 4 114 732 (DUNN) | |
| A | US - A - 4 187 732 (TAKAGI) | |
| A | FR - A - 1 084 122 (COUSSEDIERE) <br><br> ./. | |

**CLASSIFICATION OF THE APPLICATION (Int. Cl. 3)**

F 16 D 13/26
          7/02
         55/28
         67/02

**TECHNICAL FIELDS SEARCHED (Int.Cl. 3)**

F 16 D

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 12-02-1982 | ORTHLIEB |

EPO Form 1503.1  06.78

# EUROPEAN SEARCH REPORT

**European Patent Office**

| | DOCUMENTS CONSIDERED TO BE RELEVANT | | | CLASSIFICATION OF THE APPLICATION (Int. Cl.³) |
|---|---|---|---|---|
| Category | Citation of document with indication, where appropriate, of relevant passages | Relevant to claim | | |
| A | DE - A - 1 425 313 (LOHMANN) | | | |
| | ---------- | | | |
| | | | | **TECHNICAL FIELDS SEARCHED (Int. Cl.³)** |

EPO Form 1503.2   06.78